# EUROPEAN PATENT SPECIFICATION

(11) **EP 3 766 395 B1**
(45) Date of publication and mention of the grant of the patent: **07.06.2023**
(21) Application number: 19187313.2
(22) Date of filing: 19.07.2019
(51) Int. Cl.: A47J 43/07

(54) **CONTAINER FOR A KITCHEN APPLIANCE**
BEHÄLTER FÜR EIN KÜCHENGERÄT
RÉCIPIENT DESTINÉ À UN APPAREIL DE CUISINE

(43) Date of publication of application: 20.01.2021
(73) Proprietor: BSH Hausgeräte GmbH, 81739 München (DE)
(72) Inventor: Bürzle, Sonja, 89257 Illertissen (DE); Brecko, Ales, 3000 Celje (SI)

(56) References cited:
- EP-A2- 1 566 129
- GB-A- 2 445 026
- GB-A- 2 547 683
- US-A1- 2008 217 446
- US-A1- 2018 213 980
- US-B1- 6 748 853

## Description

### Background of the invention

The present invention relates to a kitchen appliance, more particularly to a container for a kitchen appliance and a kitchen appliance comprising such a container.

### State of the Art

Kitchen appliances for processing food such as blenders, food processors, juicers, stand mixers are becoming ever popular. Demanding users require from new appliances almost unachievable performance. This means they have to be more powerful and also to process food faster than ever.

The result of these facts are more stringent safety requirements which are mostly reflected in standards. All the kitchen appliances comprising rotating food processing tools especially the ones provided with blades can be extremely dangerous in case of an open container. Therefore, it should not be possible to use the appliance if the lid is not on the container and positioned correctly to enable safe use.

There are many solutions to this problem that prevent appliance operation when the lid is not properly on. They are mainly mechanical and generally interlock an appliance base with its container. In those systems, the interlock is activated when the container depresses a switch in the base as the container is set on the base. One variation to this system uses a rod that is comprised in the container or its handle and activates the switch when the container lid is secured. Other variations use a magnetic switch in the base and metal activations means in the container.

However, even with the most advanced solutions situations still occur when the user doesn't realize when or if the lid is in a correct position. This can be quite annoying as it's not immediately obvious and one doesn't know why the appliance cannot be started. Thus, many users especially elderly people need a simple, unequivocal and unambiguous signal that the appliance can be operated and is safe for use.

A container for a kitchen having a position indicating means is known from US 2008/217446 and GB 2 547 683.

### Problem to be solved

It is an object of the present invention to overcome the above-mentioned shortcomings of the prior art and particularly to improve safe use of a kitchen appliance in the most efficient and convenient way possible.

### Solution according to the invention

The object is achieved by a container according to the features of claim 1. Advantageous embodiments that can be implemented by themselves or in combination are described in dependent claims.

The invention relates to a container for a kitchen appliance, comprising:
- a lid with a first communication element,
- a holding means with a recess and having a position indication means,
wherein the position indication means comprises a first indication area, a second indication area and a second communication element being configured to communicate with the first communication element so that:
when the lid is positioned correctly in relation to the container, the first communication element of the lid is in full interaction with the second communication element of the position indication means and the first indication area is flush with the recess whereby the user is given information that the lid is safely closed, or
when the lid is positioned incorrectly in relation to the container, the first communication element of the lid is in no interaction with the second communication element of the position indication means and the second indication area is flush with the recess whereby the user is given information that the lid is not safely closed, wherein the holding means is configured to be detachable from the container.

Upon interaction of the first communication element of the lid with the second communication element of the position indication means the position indication means is urged down. When the lid is in the correct position in respect to the container, the first indication area is visible through the recess in the holding means. As soon as the lid is displaced from the correct position, the first communication element is not in full interaction with the second communication element anymore and the position indication means is pushed back. When the first communication element is in no interaction with the second communication element, the lid is in the incorrect position and the second indication area can be seen through the recess.

There is an intermediate position which is not the correct position. In this case the first communication element is in interaction with the second communication element. The position indication means is pushed down so that through the recess the area can be seen that is adjacent to the first indication area and the second indication area. Hence the recess is not flush with the first indication area or the second indication area.

The first indication area is different from the second indication area. These differentiating features can be realised in many ways and are subject matter of the dependent claims.

The container according to the invention provides the following advantages:
- very simple, effective, unequivocal and unambiguous indication of the correct and incorrect position of the lid in regard to the container
- in this manner safe use of the appliance is improved and misusage avoided

### Embodiments of the invention

According to one embodiment, the first indication area is a first chromatic area and the second indication area is a second chromatic area. Chromatic area stands for a coloured area. This can be realized as monochromatic, involving one colour, or multichromatic, involving more colours or combinations thereof. The effect of this is that the user is given an improved visual feedback whether the lid is positioned correctly on the container as usually people sense colours very well.

The colour can be present on the position indication means as a coating (for instance printed) or in any other manner.

Specifically, the first indication area or the second indication area can simply not be additionally coloured, i.e. it can be coloured as the surface of the position indication means.

In a preferred embodiment, the first chromatic area is of different colour than the second chromatic area. Typically, the first chromatic area can be coloured green and the second chromatic area can be coloured red. This has the effect that the green colour is perceived by users as a positive information, lid safely closed, and the red colour is perceived as a negative information, lid not safely closed.

In an advantageous solution, the first indication area is a first characteristical area and the second indication area is a second characteristical area.

As some people suffer from colour blindness this solution has the advantage to enable them to clearly differentiate open and closed position of the lid.

According to one preferred embodiment, the first characteristical area and/or the second characteristical area can contain characters and/or symbols. Specifically, characters include hatches, patterns, textures, letters, numbers and the like. Symbols can be graphical symbols of any type. Typically the first characteristical area can contain a combination of letters "CLOSED" and the second characteristical area a combination of letters "OPEN". Hence the user is given a direct and unmistakable visual information about the position of the lid in respect to the container.

Preferably, the first characteristical area and/or the second characteristical area are realized such that some characters and/or symbols are arranged on a coloured background. Thus, the characteristical ares can be combined with the chromatic areas in any combination.

Specifically, the first indication area or the second indication area can be void of any material. This means it's realized as an opening in the position indication means that fully or in part replaces the first indication area or the second indication area. That being said when such an indication area is aligned with the recess, the user actually doesn't see the surface of the position indication means but the internal of the holding means or its shell.

Openings can be cheaper to make than coating the indication areas of the position indication means. Moreover, this enables some savings in terms of material costs.

Preferably, the position indication means is supported by a biasing means, which can be a spring. This enables a smooth operation of the position indication means as it can easily move in a vertical direction.

According to one embodiment the recess is positioned on a front surface of the holding means. As this is normally the most central position and the user interacts with it most of the time during use it certainly brings attention. So this position can be of advantage.

Advantageously, the recess is positioned on at least one of the lateral surfaces of the holding means. This has the effect that the recess and the indication if the lid is positioned correctly can be seen from the side. When in use, kitchen appliances have different positions of the container in relation to the appliance base. Hence this can prove useful.

In a preferred embodiment, the front surface and/or the lateral surfaces of the holding means are non-transparent. This accounts for a bigger contrast between the first indication area and/or the second indication area and the surfaces of the holding means.

Especially for instance in case where one of the indication areas is coloured light, i.e. white, and the surface of the holding means is dark, i.e. black. Thus, the user can even more unequivocally and unambiguously determine whether the lid is safely closed or not.

In an advantageous solution, the front surface and/or the lateral surfaces of the holding means are transparent. This embodiment is exactly the opposite of the above mentioned embodiment. In this case, a bigger contrast can be achieved so that one or both of the indication areas are coloured dark and the front surface and/or the lateral surfaces of the holding means are coloured light, i.e. transparent.

According to the invention, the holding means is configured to be detachable from the container. The effect is that the container can be safely put in a dishwasher without concern that water will ingress into the holding means.

According to one embodiment the position indication means is made of plastic material. This accounts for a lower production cost.

Typically, the position indication means comprises a third communication element. As the position indication means is pushed down indicating the secured position of the lid, the third communication element activates the switch in the kitchen appliance base when the container is placed on the base. It transfers the information that the lid is correctly closed to the appliance base. This enables operation of the appliance as the electrical motor can be run.

Advantageously, the recess can be positioned in the bottom portion, the central portion or the upper portion of the front surface and/or of at least one of the lateral surfaces of the holding means. The front surface and the lateral surfaces typically extend from the bottom portion to the upper portion.

A second aspect of the invention is a kitchen appliance comprising the container according to claim 1 and the dependent claims.

### Brief description of the figures

Fig. 1 is a schematic view of a kitchen appliance (blender)
Fig. 2 is a isometric view of the container with the lid on
Fig. 3 is a section view of the container with the lid in the incorrect position
Fig. 4 is a section view of the container with the lid in the correct position
Fig. 5 is a front view of the position indication means

### Detailed description

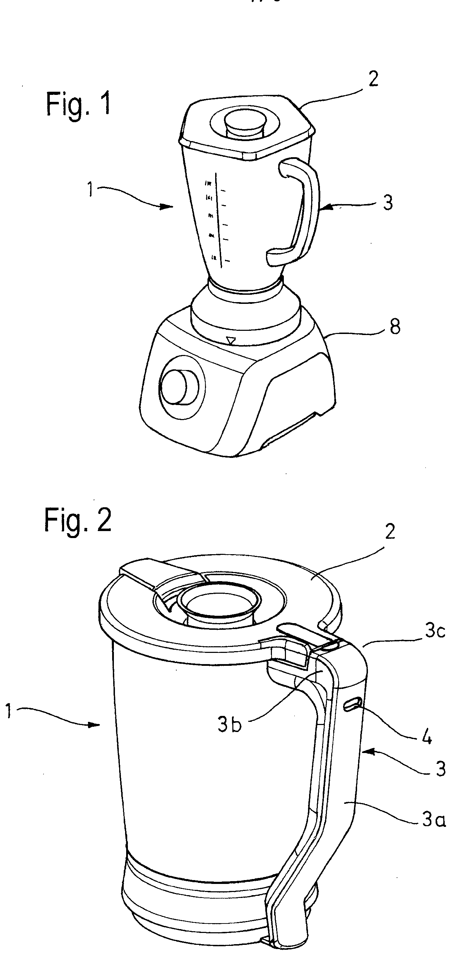

Fig. 1 depicts a kitchen appliance of prior art, more specifically a blender, with the container 1 which is received on the base 8 of the blender. The container 1 contains a food processing tool and is covered by the lid 2. The holding means 3 or a handle is part of the container 1. A bottom part of the container 1 comprises a clutch that can be coupled to an output shaft of an electrical motor which is arranged in the base 8 (this cannot be seen). On the front side of the base 8 the control knob is positioned.

Fig. 2 shows the container 1 according to one embodiment of the invention. The lid 2 is in a closed position with respect to the container 1 which enables safe use of the blender. The holding means 3 (i.e. handle) is provided with the recess 4 which is arranged on its front surface 3a. The recess 4 is positioned in the upper portion of the handle 3 and centrally in regard to the front surface 3a thereof. Laterally of the front surface 3a the lateral surfaces 3b, 3c are arranged. As the front surface 3a these also extend from the bottom portion to the upper portion of the holding means 3.

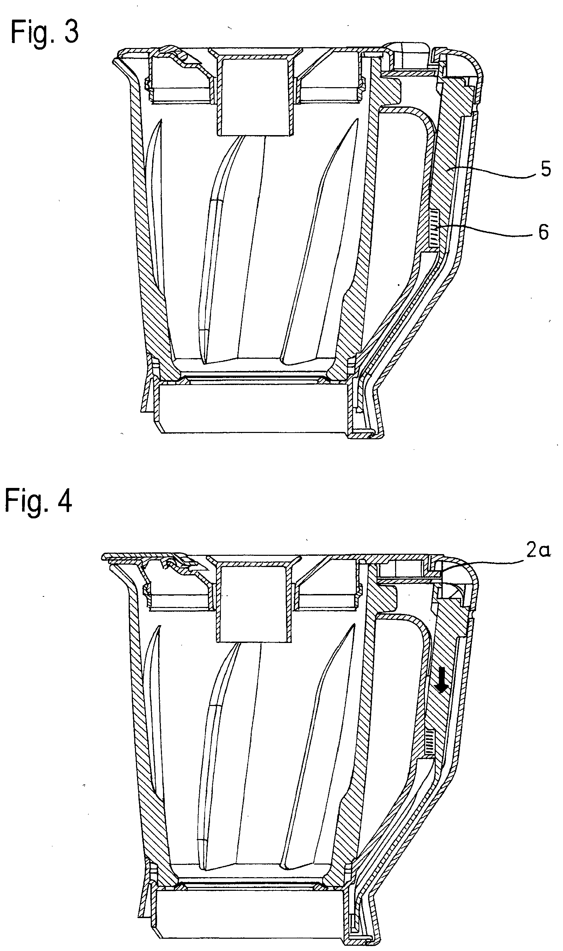

Fig. 3 depicts the container 1 with the lid 2 on, but in an incorrect, unsafe position. The first communication element 2a of the lid 2 hasn't reached the second communication element 5a of the position indication means 5 to interact with it yet. Therefore, the second indication area 5c is aligned with the recess 4 giving the user information that the lid 2 is not safely closed. In this position the position indication means 5 isn't urged downward to push the position indication means 5 against the force of the biasing means 6 (the spring) by which it is supported. The position indication means 5 is arranged in the interior of the handle 3. The handle 3 is covered by various panels or shells, for example the front panel on the front side, the side panels on sides.

Fig. 4 shows the container with the lid 2 on, but in a correct, safe position. The first communication element 2a of the lid 2 is in full interaction with the second communication element 5a of the position indication means 5 which has been pushed down as depicted by an arrow. Hence, the first indication area 5b is aligned with the recess 4 giving the user information that the lid 2 is safely closed. The biasing means 6 or the spring is compressed.

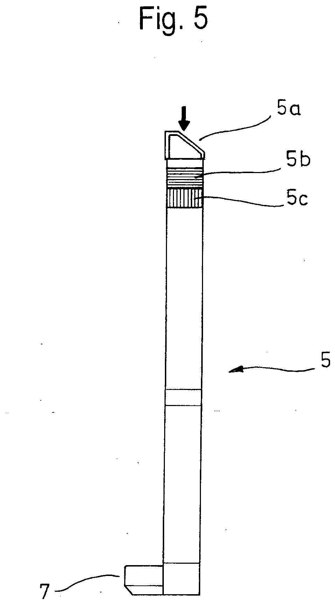

Fig. 5 depicts the position indication means 5 with the second communication element 5a, first indication area 5b and the second indication area 5c. The most upper portion of the position indication means 5 forms the second communication element 5a. Under the second communication element 5a the first indication area 5b is positioned. The second indication area 5c is arranged under the first indication area 5b. The first indication area 5b is darker in colour than the second indication area 5c.

The second communication element 5a has a ramp on its right side. This means the lid 2 is rotated in a clockwise direction as seen in plan view or in other words from the right to bring the second communication element 5a in interaction with the first communication element 2a in order to push the position indication means 5 downward.

On the lower part of the position indication means 5 the third communication element 7 is formed. As the position indication means 5 is pushed down indicating the secured position of the lid 2, the third communication element 7 activates the switch in the kitchen appliance base 8 if the container 1 is set on the base 8. This enables use of the appliance.

In general, the lid 2 can simply be put on the container 1 in the correct position in relation to the container 1 and be brought in alignement with the holding means 3 (handle) so that the first communication element 2a of the lid 2 interacts with the second communication element 5a of the position indication means 5 and pushes it downward. However, it can also be put on the container 1 in any other position and then be rotated in a clockwise or a counterclockwise direction to bring it in the correct position in respect to the container 1. This depends on how the interaction between the lid 2 and the holding means 3 is implemented.

The solution according to the invention and any of its embodiments can be used with any kitchen appliance that requires correct and safe position of the lid in respect to the container in order to operate the appliance. For instance, those kitchen appliances are blenders, stand mixers, compact food processors, juicers, water kettles, steamers etc.

### Reference signs list

1 container
2 lid
2a first communication element
3 holding means
3a front surface
3b, 3c lateral surfaces
4 recess
5 position indication means
5a second communication element
5b first indication area
5c second indication area
6 biasing means
7 third communication element

## Claims

1. A container (1) for a kitchen appliance comprising:
- a lid (2) with a first communication element (2a),
- a holding means (3) with a recess (4) and having a position indication means (5),
wherein the position indication means (5) comprises a first indication area (5b), a second indication area (5c) and a second communication element (5a) being configured to communicate with the first communication element (2a) so that:
when the lid (2) is positioned correctly in relation to the container (1), the first communication element (2a) of the lid (2) is in full interaction with the second communication element (5a) of the position indication means (5) and the first indication area (5b) is flush with the recess (4) whereby the user is given information that the lid (2) is safely closed, or
when the lid (2) is positioned incorrectly in relation to the container (1), the first communication element (2a) of the lid (2) is in no interaction with the second communication element (5a) of the position indication means (5) and the second indication area (5c) is flush with the recess (4) whereby the user is given information that the lid (2) is not safely closed, **characterized in that**
the holding means (3) is configured to be detachable from the container (1)..

2. Container (1) according to claim 1, wherein the first indication area (5b) is a first chromatic area and the second indication area (5c) is a second chromatic area.

3. Container (1) according to claim 2, wherein the first chromatic area is of different colour than the second chromatic area.

4. Container (1) according to claim 1 or 2, wherein the first indication area (5b) is a first characteristical area and the second indication area (5c) is a second characteristical area.

5. Container (1) according to claim 4, wherein the first characteristical area and/or the second characteristical area contain characters and/or symbols.

6. Container (1) according to any of the preceding claims, wherein the position indication means (5) is supported by a biasing means (6).

7. Container (1) according to claim 6, wherein the biasing means (6) is a spring.

8. Container (1) according to any of the preceding claims, wherein the recess (4) is positioned on a front surface (3a) of the holding means (3).

9. Container (1) according to any of claims 1-7, wherein the recess (4) is positioned on at least one of the lateral surfaces (3b, 3c) of the holding means (3).

10. Container (1) according to any of the preceding claims, wherein the front surface (3a) and/or the lateral surfaces (3b, 3c) of the holding means (3) are non-transparent.

11. Container (1) according to any of claims 1-9, wherein the front surface (3a) and/or the lateral surfaces (3b, 3c) of the holding means (3) are transparent.

12. Container (1) according to any of the preceding claims, wherein the first indication area (5b) or the second indication area (5c) is realized as an opening in the position indication means (5).

13. Container (1) according to any of the preceding claims, wherein the position indication means (5) is made of plastic material.

14. Container (1) according to any of the preceding claims, wherein the position indication means (5) comprises a third communication element (7).

15. Kitchen appliance comprising the container (1) according to any of the preceding claims.

## Patentansprüche

1. Behälter (1) für ein Küchengerät, der Folgendes umfasst:
- einen Deckel (2) mit einem ersten Verbindungselement (2a),
- ein Haltemittel (3) mit einer Aussparung (4) und einem Positionsangabemittel (5),
wobei das Positionsangabemittel (5) einen ersten Angabebereich (5b), einen zweiten Angabebereich (5c) und ein zweites Verbindungselement (5a) umfasst, das so konfiguriert ist, dass es mit dem ersten Verbindungselement (2a) verbunden ist, so dass:
das erste Verbindungselement (2a) des Deckels (2), wenn dieser in Bezug auf den Behälter (1) richtig positioniert ist, vollständig mit dem zweiten Verbindungselement (5a) des Positionsangabemittels (5) zusammenwirkt und der erste Angabebereich (5b) mit der Vertiefung (4) bündig abschließt, wodurch der Benutzer darüber informiert wird, dass der Deckel (2) sicher geschlossen ist, oder
das erste Verbindungselement (2a) des Deckels (2), wenn dieser in Bezug auf den Behälter (1) nicht richtig positioniert ist, nicht mit dem zweiten Verbindungselement (5a) des Positionsangabemittels (5) zusammenwirkt und der zweite Angabebereich (5c) mit der Vertiefung (4) bündig abschließt, wodurch der Benutzer darüber informiert wird, dass der Deckel (2) nicht sicher geschlossen ist,
**dadurch gekennzeichnet, dass**
das Haltemittel (3) so konfiguriert ist, dass es sich vom Behälter (1) abnehmen lässt.

2. Behälter (1) nach Anspruch 1, wobei es sich bei dem ersten Angabebereich (5b) um einen ersten farbigen Bereich und bei dem zweiten Angabebereich (5c) um einen zweiten farbigen Bereich handelt.

3. Behälter (1) nach Anspruch 2, wobei der erste farbige Bereich eine andere Farbe besitzt als der zweite farbige Bereich.

4. Behälter (1) nach Anspruch 1 oder 2, wobei es sich bei dem ersten Angabebereich (5b) um einen ersten charakteristischen Bereich und bei dem zweiten Angabebereich (5c) um einen zweiten charakteristischen Bereich handelt.

5. Behälter (1) nach Anspruch 4, wobei der erste und/oder der zweite charakteristische Bereich Zeichen und/oder Symbole enthält.

6. Behälter (1) nach einem der vorhergehenden Ansprüche, wobei das Positionsangabemittel (5) von einem Vorspannmittel (6) gehalten wird.

7. Behälter (1) nach Anspruch 6, wobei es sich bei dem Vorspannmittel (6) um eine Feder handelt.

8. Behälter (1) nach einem der vorhergehenden Ansprüche, wobei die Vertiefung (4) an einer Vorderseite (3a) des Haltemittels (3) positioniert ist.

9. Behälter (1) nach einem der Ansprüche 1-7, wobei die Vertiefung (4) an mindestens einer der Seitenflächen (3b, 3c) des Haltemittels (3) positioniert ist.

10. Behälter (1) nach einem der vorhergehenden Ansprüche, wobei die Vorderseite (3a) und/oder die Seitenflächen (3b, 3c) des Haltemittels (3) undurchsichtig sind.

11. Behälter (1) nach einem der Ansprüche 1-9, wobei die Vorderseite (3a) und/oder die Seitenflächen (3b, 3c) des Haltemittels (3) durchsichtig sind.

12. Behälter (1) nach einem der vorhergehenden Ansprüche, wobei der erste Angabebereich (5b) oder der zweite Angabebereich (5c) als Öffnung in dem Positionsangabemittel (5) ausgeführt ist.

13. Behälter (1) nach einem der vorhergehenden Ansprüche, wobei das Positionsangabemittel (5) aus Kunststoffmaterial hergestellt ist.

14. Behälter (1) nach einem der vorhergehenden Ansprüche, wobei das Positionsangabemittel (5) ein drittes Verbindungsmittel (7) umfasst.

15. Küchengerät mit dem Behälter (1) nach einem der vorhergehenden Ansprüche.

## Revendications

1. Récipient (1) pour un appareil de cuisine comprenant :
- un couvercle (2) comprenant un premier élément de communication (2a),
- un moyen de tenue (3) présentant une encoche (4) et ayant un moyen d'indication de la position (5),
dans lequel le moyen d'indication de la position (5) comprend une première zone d'indication (5b), une deuxième zone d'indication (5c) et un deuxième élément de communication (5a) configuré pour communiquer avec le premier élément de communication (2a) de sorte que :
quand le couvercle (2) est bien positionné par rapport au récipient (1), le premier élément de communication (2a) du couvercle (2) est en complète interaction avec le deuxième élément de communication (5a) du moyen d'indication de la position (5) et la première zone d'indication (5b) affleure avec l'encoche (4) ce qui fait que l'utilisateur reçoit les informations que le couvercle (2) est fermé en toute sécurité, ou
quand le couvercle (2) est mal positionné par rapport au récipient (1), le premier élément de communication (2a) du couvercle (2) n'a aucune interaction avec le deuxième élément de communication (5a) du moyen d'indication de la position (5) et la deuxième zone d'indication (5c) affleure avec l'encoche (4), ce qui fait que l'utilisateur reçoit les informations que le couvercle (2) n'est pas fermé en toute sécurité, **caractérisé en ce que** le moyen de tenue (3) est configuré pour pouvoir être détaché du récipient (1).

2. Récipient (1) selon la revendication 1, dans lequel la première zone d'indication (5b) est une première zone chromatique et la deuxième zone d'indication (5c) est une deuxième zone chromatique.

3. Récipient (1) selon la revendication 2, dans lequel la première zone chromatique est d'une couleur différente de la deuxième zone chromatique.

4. Récipient (1) selon la revendication 1 ou 2, dans lequel la première zone d'indication (5b) est une première zone caractéristique et la deuxième zone d'indication (5c) est une deuxième zone caractéristique.

5. Récipient (1) selon la revendication 4, dans lequel la première zone caractéristique et/ou la deuxième zone caractéristique contiennent des caractères et/ou des symboles.

6. Récipient (1) selon l'une quelconque des revendications précédentes, dans lequel le moyen d'indication de la position (5) est supporté par un moyen de rappel (6).

7. Récipient (1) selon la revendication 6, dans lequel le moyen de rappel (6) est un ressort.

8. Récipient (1) selon l'une quelconque des revendications précédentes, dans lequel l'encoche (4) est positionnée sur une surface frontale (3a) du moyen de tenue (3).

9. Récipient (1) selon l'une quelconque des revendications 1-7, dans lequel l'encoche (4) est positionnée sur au moins l'une des surfaces latérales (3b, 3c) du moyen de tenue (3).

10. Récipient (1) selon l'une quelconque des revendications précédentes, dans lequel la surface frontale (3a) et/ou les surfaces latérales (3b, 3c) du moyen de tenue (3) ne sont pas transparentes.

11. Récipient (1) selon l'une quelconque des revendications 1-9, dans lequel la surface frontale (3a) et/ou les surfaces latérales (3b, 3c) du moyen de tenue (3) sont transparentes.

12. Récipient (1) selon l'une quelconque des revendications précédentes, dans lequel la première zone d'indication (5b) ou la deuxième zone d'indication (5c) est réalisée en tant qu'orifice dans le moyen d'indication de la position (5).

13. Récipient (1) selon l'une quelconque des revendications précédentes, dans lequel le moyen d'indication de la position (5) est fabriqué en matière plastique.

14. Récipient (1) selon l'une quelconque des revendications précédentes, dans lequel le moyen d'indication de la position (5) comprend un troisième élément de communication (7).

15. Appareil de cuisine comprenant le récipient (1) selon l'une quelconque des revendications précédentes.
